# EUROPEAN PATENT SPECIFICATION

(11) **EP 0 807 088 B1**
(45) Date of publication and mention of the grant of the patent: **07.04.1999**
(21) Application number: 96904333.0
(22) Date of filing: 31.01.1996
(51) Int. Cl.: C02F 3/30

(54) **PROCESS FOR AEROBIC TREATMENT OF WASTE WATER**
VERFAHREN ZUR AEROBEN ABWASSERREINIGUNG
PROCEDE DE TRAITEMENT AEROBIE DES EAUX USEES

(30) Priority: 31.01.1995 NL 9500171
(43) Date of publication of application: 19.11.1997
(73) Proprietor: Paques B.V., NL-8560 AB Balk (NL)
(72) Inventor: HABETS, Leonard, Hubertus, Alphonsus, NL-8604 AD Sneek (NL); DRIESSEN, Wilhelmus, Johannes, Maria, NL-8252 JR Dronten (NL)
(74) Representative: de Bruijn, Leendert C.
(86) International application number: PCT/NL96/00048
(87) International publication number: WO 96/23735

(56) References cited:
- EP-A- 0 143 149
- WO-A-93/25485
- DD-A- 205 877
- PATENT ABSTRACTS OF JAPAN vol. 007, no. 219 (C-188), 29 September 1983 & JP,A,58 114795 (MIYOSHI SHIYOUKAI:KK), 8 July 1983,
- PATENT ABSTRACTS OF JAPAN vol. 013, no. 431 (C-640), 26 September 1989 & JP,A,01 168395 (TOBISHIMA CORP), 3 July 1989,
- PATENT ABSTRACTS OF JAPAN vol. 12, no. 11 (C-468) [2858] , 13 January 1988 & JP,A,62 168592 (HITACHI PLANT ENG. & CONSTR. CO. LTD.), 24 July 1987,
- PATENT ABSTRACTS OF JAPAN vol. 12, no. 501 (C-556) [3348] , 27 December 1988 & JP,A,63 209792 (INQUE JAPAX RES. INC.), 31 August 1988,
- PATENT ABSTRACTS OF JAPAN vol. 007, no. 061 (C-156), 15 March 1983 & JP,A,57 207596 (NIHON GAISHI KK), 20 December 1982,

## Description

The invention relates to a process and an apparatus for the aerobic treatment of waste water in an aerated reactor into which the effluent to be treated is fed at the bottom.

### Background: the process

The biological treatment of waste water can essentially take place in two ways, i.e. aerobically, by making use of microorganisms which use oxygen, and anaerobically, by growth of microorganisms in the absence of oxygen. Both methods have found their place in the art of waste water treatment. The first method is used mainly, when there is a low degree of contamination, at low water temperature and as a polishing treatment. The second method offers advantages especially as a pretreatment for more severe organic contamination and at higher water temperature. Both methods are adequately known.

Nowadays anaerobic reactors are frequently placed in series with aerobic reactors, such as, for example:
1. compact anaerobic pretreatment followed by aerobic after-treatment ("polishing") for extensive removal of BOD/COD;
2. nitrification followed by denitrification for extensive removal of nitrogen;
3. sulphate reduction followed by oxidation of sulphide to elemental sulphur for removal of sulphur.

To an increasing extent the existence of aerobic and anaerobic reactions which take place simultaneously in the same reactor is also being reported. Examples of these are nitrification/denitrification reactions and denitrification under the influence of sulphide oxidation.

Anaerobic processes can also be the reason for low sludge growth figures in highly loaded aerobic systems. The use of a relatively low oxygen pressure in a reactor containing agglomerated (flocculated) biomass can lead to rapid conversion of oxygen-binding substances by aerobic bacteria which are present in the outer layer of the flocs. These bacteria preferably store the nutrition as reserves in the form of polysaccharides outside their cells.

Subsequently the bacteria get no opportunity to use these reserves because of lack of oxygen, and these reserves therefore start to serve as a substrate for anaerobic mineralisation processes in the interior of the floc, where no oxygen can penetrate. As a result a simultaneous build-up and break-down of the polysaccharides is produced, the polysaccharides also serving as an adhesive for the cohesive bacterial culture. Protozoa can also play an important role as bacteria-consuming predators with a low net sludge yield.

In this context the term micro-aerophilic is indeed used to indicate that less oxygen is fed to the system than would be necessary by reason of a complete aerobic reaction. This has the result that a bacterial population develops which can multiply under a very low oxygen pressure. A disadvantage of these conditions can be that foul-smelling substances can be produced, such as H₂S, NH₃ or volatile organic acids. These can be stripped off by air bubbles and pass into the outside air. It can therefore be important that this air is collected for treatment if necessary.

On the other hand, it is important that sufficient inoculating material remains present in the reactor and that the flocs formed are not flushed out before the anaerobic mineralisation processes have taken place.

Recent research has revealed that anaerobic bacteria can have a high tolerance to oxygen (M.T. Kato, Biotech. Bioeng. **42**: 1360-1366 (1993)). The addition of oxygen can sometimes also be advantageous for an anaerobic process, for example for suppressing sulphate reduction in fermentation tanks, as described in EP-A 143 149. In this latter process, organic solid waste present in a slurry is converted with the generation of a gas which contains methane as the main constituent, also containing a small proportion of up to 3 %, and more particularly 0.1-1.5 % by vol., of oxygen.

### Background: the reactor

The retention of biomass in a reactor for waste water treatment is of essential importance for the capacity of said reactor. In conventional aerobic treatment this is usually achieved by continuously returning the sludge (= biomass) separated off outside the reactor, by means of settling, to the aeration tank where the biological reactions take place. This process. in which the sludge concentration in the aeration tank is 3-6 g/l, is termed the activated sludge process. The same principle is also applied for the earlier anaerobic treatment systems, although the sludge is then usually separated off with the aid of lamellae separators before it is recycled to the anaerobic reactor chamber. This process is known as the contact process.

An improvement in the anaerobic contact process relates to the use of systems with which sludge retention is achieved in a different way, for example by integrating the settling chamber with the reaction chamber or by counteracting the flushing out of biomass by immobilisation on carrier material. It is important for accumulation that the residence time of the sludge is considerably longer than the division time of the various microorganisms. This is particularly important for the anaerobic process, because the growth rate is very low. The development of the "Upflow Anaerobic Sludge Blanket" reactor, known all over the world as the UASB reactor, in the 1970s was an important step forward for anaerobic treatment. The majority of anaerobic treatments are now carried out in this type of reactor.

The characteristic of the UASB reactor is that the effluent to be treated is fed in and distributed over the bottom of a tank, from where it flows slowly upwards through a layer of biomass. During the contact with the biomass, a gas mixture is produced which consists mainly, of CH₄, CO₂ and H₂S; this mixture is known as biogas. Said biogas bubbles upwards and thus provides for a certain degree of mixing. As a result of clever positioning of gas collection hoods below the water surface, the gas bubbles do not reach the water surface, with the result that a calm zone is produced at the top and any sludge particles swirled up are able to settle into the layer of biomass (the "sludge blanket") again. The sludge concentration in a UASB reactor is generally between 40 and 120 g/l, usually at 80 to 90 g/l. The UASB reactor is described in many patents, inter alia in EP-A 193 999 and EP-A 244 029. One reason why the UASB reactor has become the most popular anaerobic system is the fact that, with proper process control, the biomass can be allowed to grow in the form of spherical particles a few mm in size which settle very well.

In the meantime extensions or variants based on the principle of the UASB have been proposed which have higher flow speeds, for example as a result of recycling effluent, by using the biogas as an integral pump, or simply by building narrower high columns. The basic principle, however, remains the same as that of the UASB.

### Description of the invention

The invention relates to the use of an aerobic waste water treatment in a UASB reactor as described above. The process according to the invention is, thus, characterised in that use is made of a UASB reactor into the bottom of which oxygen is also fed, specifically in an amount such that the growth of a facultative and an aerobic biomass is promoted. This implies that a UASB reactor is equipped with an aeration installation, preferably with fine bubbles. A reactor of this type can be used as an independent unit or in combination with an anaerobic pretreatment. In specific cases, a reactor can also be alternately operated anaerobically and aerobically, for example in seasonal operations with severely fluctuating amounts of waste water. The process can, in principle, be used for many purposes, for example for COD/BOD removal, nitrification, denitrification and sulphide oxidation.

As a result of the upflow principle and the integral settling, it is possible to accumulate biomass in a large amount, which is more than in the activated sludge process and less than in an anaerobically, operated UASB reactor. The concentration of the biomass at the bottom of the reactor is preferably 0.5-75 g/l, more particularly 5-50 or 10-50 g/l. When the process is used as an aerobic treatment subsequent to anaerobic treatment, the biomass concentration may be lower, e.g. 0.5-10 g/l.

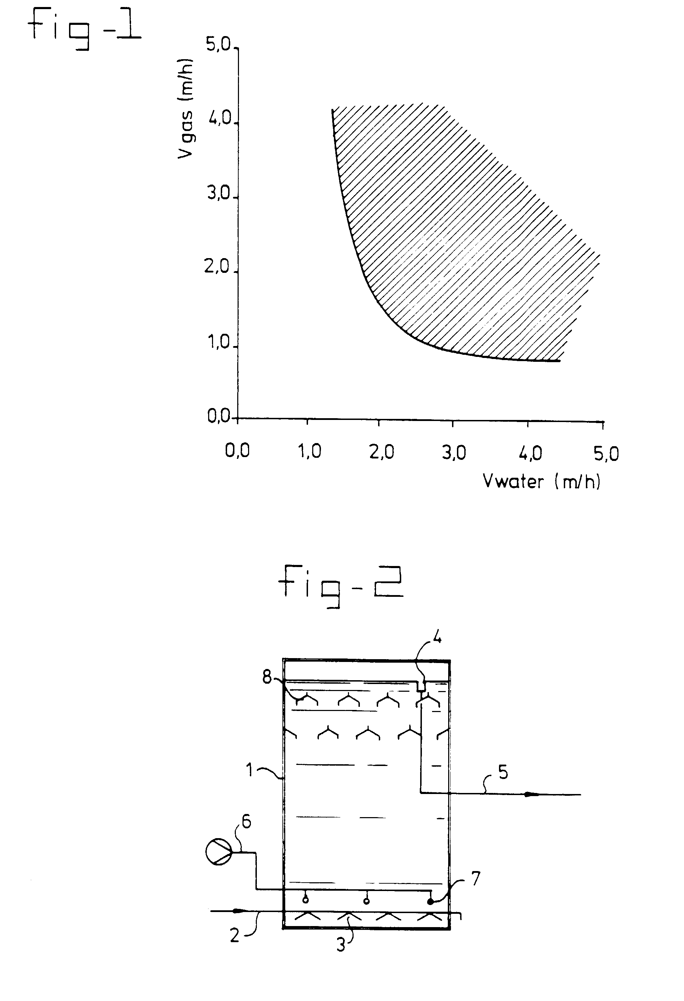

This good sludge retention is dependent both on the aeration intensity and on the hydraulic loading on the reactor. A low degree of aeration is suitable with a high hydraulic loading, and vice versa. For instance, for a specific case of a water loading of 4.0 m³/m².h, the degree of aeration is preferably below 0.9 m³/m².h, whilst for a water loading of 1.2 m³/m².h or less, the degree of aeration for sludge retention is virtually unrestricted. Conversely, for a degree of aeration of 4.0 m³/m².h, the water loading is preferably less than 1.3 m³/m².h, whilst for a degree of aeration of 0.8 m³/m².h or less, the water loading for sludge retention is virtually unrestricted. The relationships are shown in a plot in Figure 1. Depending on the reactor dimensions and the sludge used, the figures which apply can differ from those mentioned here, but the trend remains the same.

Thus, the process can be used for dilute and for concentrated waste water. Because a high density of biomass at the bottom of the reactor is used, the oxygen is not able to penetrate everywhere, with the result that anaerobic sludge mineralisation can take place. As a result, the spent air which escapes can contain traces of methane, but no more than 10 % by vol. Furthermore, as a result of the relatively short residence time of the air or oxygen bubbles, not all oxygen is able to dissolve in the water and the air which escapes will contain at least 2 % by vol., in particular more than 3 % by vol., and up to, for example, 15 % by vol. of residual oxygen. The remainder of the residual gas consists mainly of carbon dioxide and nitrogen and, possibly, methane.

The apparatus according to the invention for the aerobic treatment of waste water consists of a UASB reactor with the associated distributed water feed at the bottom of the reactor and means for integrated settling of biomass and gas collection (so-called 3-phase separation) at the top of the reactor. An integrated separation of this type generally involves the gas collection taking place beneath the liquid surface by means of gas hoods which, seen from above, extend over the full cross-section of the reactor. In the apparatus according to the invention, in contrast to a conventional UASB reactor, aeration means are located at the bottom of the reactor, either below or above the feed water distributors, or a the same level. The height of the reactor can vary from 4 to 14 metres, preferably 4.5 to 10 metres. In this context, "at the top of the reactor" means in the upper part of the reactor, i.e. at between the highest liquid level (full effective height) of the reactor and 0.75 times the effective height. Similarly "at the bottom of the reactor means in the lower part of the reactor, i.e. between the lowest liquid level and 0.25 times the effective height.

In the case of a combined anaerobic and aerobic treatment, the aerobic reactor is usually placed alongside the anaerobic reactor, the anaerobic and aerobic reactors being separate reactors. In this case the air ventilated from the anaerobic reactor can serve as aeration for the aerobic reactor.

The anaerobic and aerobic reactors can also be integrated vertically in one reactor tank. In such a vertically integrated reactor tank. the aeration means are located above the gas collection for the anaerobic section. An apparatus of this type for integrated anaerobic and aerobic treatment of waste water consists of a UASB reactor, in which distributors for supplying liquid are located at the bottom of the reactor. gas collection means are positioned in the mid-section and aeration means are positioned above these, and means for integrated settling of biomass and gas collection are located at the top of the reactor. The gas hoods for the anaerobic section and aeration means are not necessarily located at precisely mid-height of the reactor. Thus, "in the mid-section" means between 0.25 and 0.75 times the effective height of the reactor. Depending on the type of waste water to be treated, the location of these components can be lower or higher. In this case the total height of the reactor can vary from preferably 6 to 25 metres.

In a particular embodiment of the apparatus according to the invention, the aeration means are vertically movable over a part of the reactor height. This can be performed e.g. by means of a framework on which aerators are arranged at the upper side and optionally gas hoods are arranged at the lower side, which framework can be mechanically raised and lowered with respect to the reactor height. This embodiment allows easy adaptation of the reactor configuration to the specific waste water and the desired purification results.

In the case of the process with integrated anaerobic/aerobic treatment, the water feed rate can be adjusted so that the sludge balance is optimum, that is to say that the anaerobic sludge remains in the bottom half of the reactor and the aerobic sludge remains in the top half. If extensive sludge production takes place in the aerobic section, the surplus sludge can be allowed to settle into the anaerobic phase by lowering the water feed rate, so that the quantity of aerobic biomass becomes constant again. The surplus aerobic sludge can also become heavier in the course of time and settle into the anaerobic phase by itself.

A variant of the apparatus for vertically integrated anaerobic and aerobic treatment of waste water described above comprises, instead of the means for integrated settling of biomass gas collection at the top a reactor, a packing material for supporting aerobic bacteria in the top section of the reactor. The packing material may comprise filters or other means of immobilising aerobic bacteria. In this embodiment, the gas issuing from the aerobic phase can be collected above the reactor or it can simply be vented into the atmosphere. An effective 3-phase separation above the lower, anaerobic section is important here, in order to prevent anaerobic gas from interfering with the aerobic process. Again the aeration means. and preferably also the anaerobic gas collectors, may be vertically movable.

Figure 1 shows a measurement of the relationship between hydraulic loading (V_{water}) and aeration rate (V_{gas}). V_{water} and V_{gas} are shown in m/h = m³/m².h. The shaded area is the region where sludge is flushed out.

Figure 2 shows an apparatus for separate aerobic treatment. Reactor 1 is a UASB reactor. Waste water, which optionally has been subjected to anaerobic pretreatment, is fed via feed 2 and distributors 3 into the bottom of the reactor in such a way that virtually a vertical plug flow is produced. The treated water is discharged via overflow 4 at the top of the reactor and discharge line 5. Air or oxygen is supplied via line 6 fitted with a compressor and is dispersed in the water via distributors 7. The gas hoods 8 at the top of the reactor collect the residual gas, there being sufficient space above the hoods for settling of the aerobic sludge. The gas hoods are provided with discharge lines (not shown) for the residual gas.

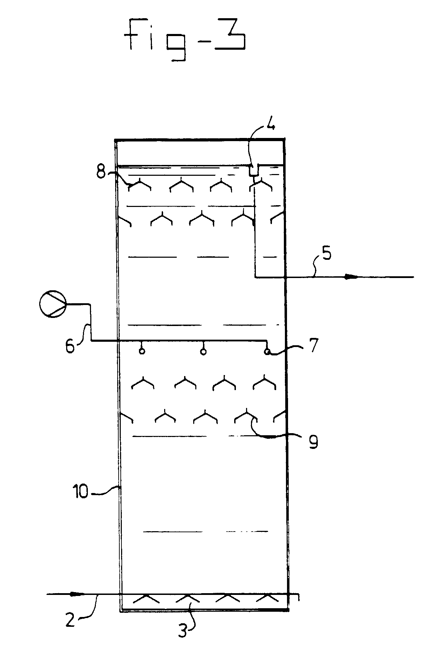

Figure 3 shows an apparatus for integrated anaerobic and aerobic treatment. In respect of the components not discussed here, the reactor 10 is comparable to the reactor in Figure 2. Gas hoods 9 for removal of the anaerobic gas (mainly methane) are located in the mid-section of reactor 10. The air distributors 7 are positioned above said hoods.

### Example 1

A UASB-type pilot reactor as depicted in Fig. 2 having a capacity of 12 m³, an effective (liquid) height of 4.5 m and a bottom surface area of 2.67 m² was used as a micro-acrophilic reactor without anaerobic pretreatment. Untreated papermill waste water having a COD of about 1500 mg/l was fed into the reactor at a rate of 1.5 m³/h (upflow velocity Vᵤₚ 0.56 m/h). The reactor was aerated at 12 m³/h of air (Vᵤₚ 4.5 m/h). The reactor temperature was about 30°C and pH was neutral. No detectable odour components were present in the spent air.

After one week of adaptation the results were as follows:

| | CODₜₒₜₐₗ | COD_{filtered} | acetate | propionate |
|---|---|---|---|---|
| influent (mg/l) | 1515 | 1455 | 426 | 181 |
| effluent (mg/l) | 1006 | 762 | 198 | 93 |
| efficiency (%) | 33 | 47 | 53 | 48 |

Further optimisation leads to an efficiency of total COD removal of 75 % or more.

### Example 2

The same reactor of example 1 was used as an aerobic post-treatment reactor. Anaerobically pretreated papermill waste water having a COD of about 600 mg/l was fed into the reactor at a rate of 4.0 m³/h (upflow velocity Vᵤₚ 1.5 m/h). The reactor was aerated with 3.5 m³/h of air (Vᵤₚ 1.3 m/h). No detectable odour components were present in the spent air.

The COD values, before and after filtration of the sample, were as follows:

| | CODₜₒₜₐₗ | COD_{filtered} |
|---|---|---|
| influent (mg/l) | 621 | 543 |
| effluent (mg/l) | 465 | 249 |
| efficiency (%) | 25 | 54 |

These values show that the reactor converts a considerable part of the residual COD after anaerobic treatment.

## Claims

1. Process for the aerobic treatment of waste water in an aerated reactor into which the waste water to be treated is fed at the bottom, characterised in that use is made of an upflow anaerobic sludge blanket reactor, into the bottom of which oxygen is also fed in an amount such that the growth of a facultative and an aerobic biomass is promoted.

2. Process according to Claim 1, characterised in that the amount of oxygen fed in is such that the gas issuing from the reactor contains at least 2 %, preferably at least 3 % by vol. of oxygen.

3. Process according to Claim 1 or 2, characterised in that the aeration takes place via bubble aeration.

4. Process according to one of Claims 1-3, characterised in that the concentration of biomass at the bottom of the reactor is 5 to 50 g/l.

5. Process according to one of Claims 1-4, characterised in that the aerobic treatment is carried out in combination with an anaerobic pretreatment.

6. Process according to Claim 5, characterised in that use is made of the air ventilated from the anaerobic pretreatment for the aeration in the aerobic treatment.

7. Process according to Claim 5. characterised in that the aerobic treatment and the anaerobic pretreatment are carried out in the same tank.

8. Process according to Claim 7, wherein the water feed rate is adjusted such that the quantity of aerobic biomass remains approximately constant.

9. Apparatus for the aerobic treatment of waste water, consisting of a UASB-type reactor tank, wherein distributors for supplying liquid and aeration means are located at the bottom of the reactor and means for integrated settling of biomass and gas collection are located at the top of the reactor.

10. Apparatus for integrated anaerobic and aerobic treatment of waste water, consisting of a UASB-type reactor tank, wherein distributors for supplying liquid are located at the bottom of the reactor, means for gas collection are positioned above said liquid distributors, aeration means are located above said gas collection means and means for separation of biomass and gas collection are located at the top of the reactor.

11. Apparatus for integrated anaerobic and aerobic treatment of waste water, consisting of a UASB-type reactor tank, wherein distributors for supplying liquid are located at the bottom of the reactor, means for integrated settling of biomass gas collection are positioned above said liquid distributors, aeration means are located above said gas collection means and packing material supporting aerobic bacteria is located at the top of the reactor.

12. Apparatus according to claim 10 or 11, wherein said acration means are movable over a part of the height of the reactor.

## Patentansprüche

1. Verfahren zur aeroben Abwasserbehandlung in einem belüfteten Reaktor, in den das zu behandelnde Abwasser am Boden eingeführt wird, dadurch gekennzeichnet, dass ein aufwärts fliessender anaerober Schlammdeckenreaktor (Upflow Anaerobic Sludge Blanket Reactor) verwendet wird, an dessen Boden auch Sauerstoff in einer Menge eingeführt wird, dass das Wachstum einer beliebigen und einer aeroben Biomasse gefördert wird.

2. Verfahren gemäss Anspruch 1, dadurch gekennzeichnet, dass die Menge an eingeführtem Sauerstoff so ist, dass das aus dem Reaktor austretende Gas mindestens 2 Vol.%, vorzugsweise mindestens 3 Vol.% Sauerstoff enthält.

3. Verfahren gemäss Anspruch 1 oder 2, dadurch gekennzeichnet, dass die Belüftung durch Blasenbelüftung stattfindet.

4. Verfahren gemäss einem der Ansprüche 1 bis 3, dadurch gekennzeichnet, dass die Konzentration der Biomasse am Boden des Reaktors 5 bis 50 g/ℓ beträgt.

5. Verfahren gemäss einem der Ansprüche 1 bis 4, dadurch gekennzeichnet, dass die aerobe Behandlung in Kombination mit einer anaeroben Vorbehandlung durchgeführt wird.

6. Verfahren gemäss Anspruch 5, dadurch gekennzeichnet, dass aus der anaeroben Vorbehandlung entlüftete Luft für die Belüftung in der aeroben Behandlung verwendet wird.

7. Verfahren gemäss Anspruch 5, dadurch gekennzeichnet, dass die aerobe Behandlung und die anaerobe Vorbehandlung im gleichen Behälter durchgeführt werden.

8. Verfahren gemäss Anspruch 7, wobei die Wasserbeschickungsrate so eingestellt wird, dass die Menge der aeroben Biomasse etwa konstant bleibt.

9. Vorrichtung für die aerobe Abwasserbehandlung, bestehend aus einem Reaktorbehälter vom UASB-Typ, wobei die Verteiler zum Zuführen von Flüssigkeit und die Belüftungsmittel sich am Boden des Reaktors befinden und die Mittel zum integrierten Absetzen der Biomasse und zur Gasaufsammlung sich am oberen Ende des Reaktors befinden.

10. Vorrichtung zur integrierten anaeroben und aeroben Abwasserbehandlung, bestehend aus einem Reaktorbehälter vom UASB-Typ, wobei die Verteiler zum Zuführen von Flüssigkeit sich am Boden des Reaktors befinden, die Mittel zur Gasaufsammlung über den Flüssigkeitsverteilern positioniert sind, die Belüftungsmittel sich über den Gasaufsammlungsmitteln befinden und die Mittel zur Trennung der Biomasse und zur Gasaufsammlung sich am oberen Ende des Reaktors befinden.

11. Vorrichtung zur integrierten anaeroben und aeroben Abwasserbehandlung, bestehend aus einem Reaktorbehälter vom UASB-Typ, wobei die Verteiler zum Zuführen von Flüssigkeit sich am Boden des Reaktors befinden, Mittel zum integrierten Absetzen der Biomasse und zur Gasaufsammlung über den Flüssigkeitsverteilern positioniert sind, Belüftungsmittel sich über den Gasaufsammelmitteln befinden und Packmaterial, welches aerobe Bakterien trägt, sich am oberen Ende des Reaktors befindet.

12. Vorrichtung gemäss Anspruch 10 oder 11, wobei die Belüftungsmittel über einen Teil der Höhe des Reaktors bewegbar sind.

## Revendications

1. Procédé de traitement aérobie des eaux usées dans un réacteur aéré dans lequel les eaux usées qui doivent être traitées sont introduites par le fond, caractérisé en ce qu'on utilise un réacteur à refoulement anaérobie de boue en nappe, dans le fond duquel de l'oxygène est également introduit en une quantité telle que la croissance d'une biomasse aérobie et une biomasse facultative est favorisée.

2. Procédé selon la revendication 1, caractérisé en ce que la quantité d'oxygène introduite est telle que le gaz provenant du réacteur contient au moins 2 %, et de préférence au moins 3 % en volume d'oxygène.

3. Procédé selon la revendication 1 ou 2, caractérisé en ce que -l'aération se produit par l'intermédiaire d'une aération par bulles.

4. Procédé selon l'une des revendications 1 à 3, caractérisé en ce que la concentration en biomasse au fond du réacteur est de 5 à 50 g/l.

5. Procédé selon l'une des revendications 1 à 4, caractérisé en ce que le traitement aérobie est effectué en combinaison avec un prétraitement anaérobie.

6. Procédé selon la revendication 5, caractérisé en ce qu'on utilise l'air ventilé provenant du prétraitement anaérobie pour l'aération dans le traitement aérobie.

7. Procédé selon la revendication 5, caractérisé en ce que le traitement aérobie et le prétraitement anaérobie sont effectués dans la même cuve.

8. Procédé selon la revendication 7, dans lequel la vitesse de l'alimentation en eau est telle que la quantité de biomasse aérobie reste à peu près constante.

9. Appareil de traitement aérobie des eaux usées, consistant en une cuve de réacteur du type UASB (Réacteur à refoulement anaérobie de boue en nappe), dans lequel des distributeurs d'alimentation en liquide et des moyens d'aération sont situés au fond du réaction et des moyens de décantation intégrée de la biomasse et de récupération du gaz sont situés en haut du réacteur.

10. Appareil de traitement aérobie et anaérobie intégré des eaux usées, consistant en une cuve de réacteur du type UASB, dans lequel des distributeur d'alimentation en liquide sont situés au fond du réacteur, des moyens de récupération du gaz sont positionnés au-dessus desdits distributeurs de liquide, des moyens d'aération sont situés au-dessus desdits moyens de récupération de gaz et des moyens de séparation de la biomasse et de récupération du gaz sont situés en haut du réacteur.

11. Appareil de traitement aérobie et anaérobie intégré des eaux usées, consistant en une cuve de réacteur du type UASB, dans lequel des distributeurs d'alimentation en liquide sont situés au fond du réacteur, des moyens de décantation intégrée de la biomasse et des moyens de récupération du gaz sont positionnés au-dessus desdits distributeurs de liquide, des moyens d'aération sont situés au-dessus desdits moyens de récupération de gaz et un matériau d'étoupage supportant les bactéries aérobie est situé en haut du réacteur.

12. Appareil selon la revendication 10 ou 11, dans lequel lesdits moyens d'aération sont amovibles sur une partie de la hauteur du réacteur.
